# EUROPÄISCHE PATENTSCHRIFT

(11) **EP 2 142 392 B1**
(45) Veröffentlichungstag und Bekanntmachung des Hinweises auf die Patenterteilung: **20.06.2012**
(21) Anmeldenummer: 08734879.3
(22) Anmeldetag: 28.03.2008
(51) Int. Cl.: B60J 3/02, B60Q 3/00, B60Q 3/02

(54) **SONNENBLENDE FÜR EIN KRAFTFAHRZEUG**
SUN VISOR FOR A MOTOR VEHICLE
PARE-SOLEIL POUR VEHICULE AUTOMOBILE

(30) Priorität: 02.04.2007 DE 102007016165; 08.08.2007 DE 102007037411
(43) Veröffentlichungstag der Anmeldung: 13.01.2010
(73) Patentinhaber: Johnson Controls Interiors GmbH & Co. KG, 47929 Grefrath (DE)
(72) Erfinder: WELTER, Patrick, F-57730 Lachambre (FR)
(74) Vertreter: Schwöbel, Thilo K.
(86) Internationale Anmeldenummer: PCT/EP2008/002512
(87) Internationale Veröffentlichungsnummer: WO 2008/119522

(56) Entgegenhaltungen:
- WO-A-03/055708
- DE-A1- 10 312 950
- DE-A1-102004 059 741

## Beschreibung

Die Erfindung betrifft ein Fahrzeugausstattungsteil, insbesondere eine Sonnenblende für ein Kraftfahrzeug, welche mit einer Beleuchtungseinrichtung versehen ist. Die Lichtaustrittsflächen sind vorzugsweise neben dem Schminkspiegel der Sonnenblende angeordnet, insbesondere zu beiden Seiten.

Solche Fahrzeugausstattungsteile sind allgemein bekannt. Beispielsweise ist aus der deutschen Offenlegungsschrift DE 10 2004 059 741 A1 ein Sonnenblendenkörper bekannt, der mindestens eine Lichtquelle und mindestens einen über ein Lichteinkoppelungselement mit der Lichtquelle verbundenen Lichtleiter aufweist. Nachteilig bei solchen bekannten Sonnenblendenkörpem ist, dass zur Realisierung der Beleuchtung ein vergleichsweise hoher Aufwand getrieben werden muss, insbesondere in Form einer vergleichsweise großen Leiterplatte für wenigstens eine Lichtquelle und gegebenenfalls einen Schalter bzw. in Form von mehreren verschiedenen Leiterplatten für die wenigstens eine Lichtquelle bzw. für den Schalter. WO 03/055708 A1 offenbart ein Fahrzeugausstattungsteil gemäβß dem Oberbegriff des Anspruchs 1.

Der Erfindung liegt die Aufgabe zugrunde, den Platzbedarf und konstruktiven Aufwand für eine derartige Beleuchtungseinrichtung eines Fahrzeugausstattungsteils, insbesondere einer Sonnenblende, zu verringern und gleichzeitig ein kostengünstig herstellbares sowie vergleichsweise langlebiges bzw. lebensdauerstabiles Fahrzeugausstattungsteil zu realisieren.

Die Aufgabe wird durch ein Fahrzeugausstattungsteil, mit den Merkmalen des Anspruchs 1 gelöst.

Erfindungsgemäß ist es, bevorzugt, dass das Fahrzeugausstattungsteil einen Spiegel aufweist, wobei die Leiterplatte wenigstens teilweise im Bereich des Spiegels oder wenigstens teilweise im Bereich eines Randes des Spiegels vorgesehen ist und wobei die Leiterplatte eine erheblich geringere größte Ausdehnung hat als der Spiegel, bevorzugt eine größte Ausdehnung, die der Hälfte der größten Ausdehnung des Spiegels entspricht, besonders bevorzugt eine größte Ausdehnung, die einem Drittel der größten Ausdehnung des Spiegels entspricht, ganz besonders bevorzugt eine größte Ausdehnung, die einem Viertel der größten Ausdehnung des Spiegels entspricht. Hierdurch ist es in besonders vorteilhafter Weise möglich, ein sehr platzsparendes und bauraumkompaktes Fahrzeugausstattungsteil, insbesondere als Sonnenblende, zu realisieren.

Ausführungsbeispiele der Erfindung sind in der Zeichnung dargestellt und in der nachfolgenden Beschreibung näher erläutert.
- **Figuren 1 und 2**: zeigen schematisch in perspektivischer Darstellung Ausführungsbeispiel einer Sonnenblende als Beispiel eines Fahrzeugausstattungsteils mit einem Deckel als beweglichem Element in unterschiedlichen Einstellpositionen des Deckels.
- **Figur 3**: zeigt schematisch eine Schnittdarstellung durch das Ausführungsbeispiel der Sonnenblende gemäß einer Schnittlinie A-A.
- **Figur 4**: zeigt eine schematische Rückseitendarstellung des Ausführungsbeispiels der Sonnenblende mit einer Angabe der Schnittlinie A-A.
- **Figur 5**: zeigt schematisch eine Explosionsdarstellung des Ausführungsbeispiels der Sonnenblende.

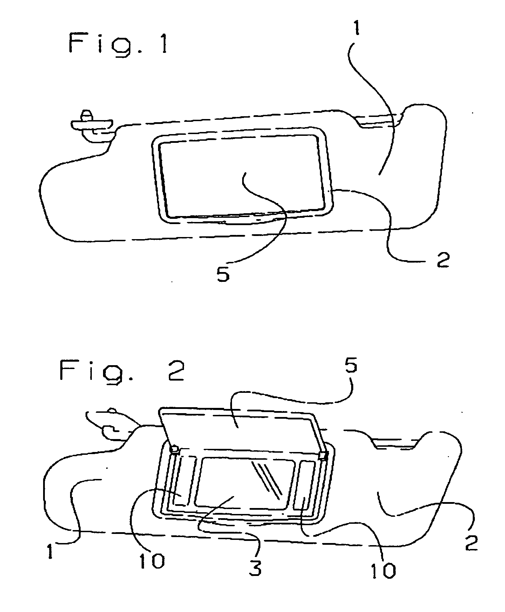

Die in Figur 1 und 2 gezeigte Sonnenblende 1 als Beispiel eines erfindungsgemäßen Fahrzeugausstattungsteils ist mit einer Spiegelkassette 2 ausgestattet, deren Spiegel 3 mit einem um eine obere Horizontalachse klappbaren Deckel 5 verschließbar ist. Links und rechts des Spiegels 3 befinden sich Leuchtfelder 10. Die Ortsangaben beziehen sich auf die frontale Verschattungsstellung der Sonnenblende 1.

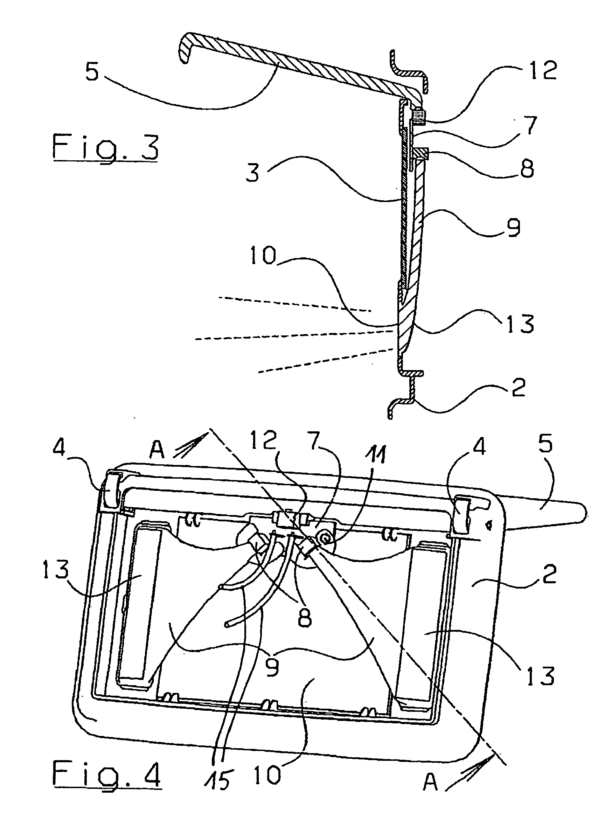

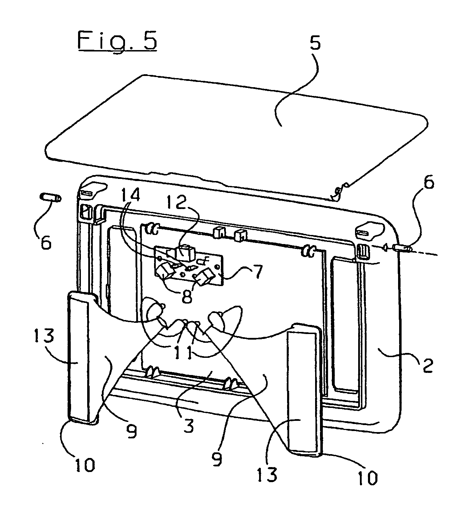

Wie aus den Figuren 3 bis 5 ersichtlich ist, sind die mit z. B. weißen oder opaken Oberflächen 13 versehenen Leuchtfelder 10 einstückig mit Lichtleitern 9 verbunden, welche von den Leuchtfeldern 10 weg spitz aufeinander zu im oberen Bereich hinter dem Spiegel 3 in Richtung einer Leiterplatte 7 verlaufen. Auf dieser sind zwei Leuchtdioden (LEDs) 8 angeordnet, die jeweils einen Lichtleiter 9 speisen und die eine besonders geringe Wärmeentwicklung im Betrieb aufweisen, d.h. eine vergleichsweise geringe Verlustleistung aufweisen. Die Leiterplatte 7 ist in ihrem oberen Bereich ferner mit einem elektrischen Schalter 12 bestückt, dessen Schaltkopf in Richtung der Drehachse 6 des Deckels 5 weist. Beim Öffnen des Deckels 5 presst eine an diesen vorgesehene Abkantung auf den Schalter 12 und stellt die elektrische Verbindung zu den LEDs 8 her. Der Deckel 5 wird dabei über Federn 4 in seiner geöffneten Position gehalten. Naturgemäß ist das Betätigen des Schalters 12 auch mit einem Schiebedeckel möglich, jedoch nicht dargestellt. In einem solchen Fall (Betätigen des Schalters mit einem Schiebedeckel) ist es beispielsweise vorgesehen, am Rand des Deckels eine keilförmige Abkantung oder dergleichen Anformung derart vorzusehen, dass bei einem Verschieben des Deckels im wesentlichen parallel zu seiner Haupterstreckungsrichtung der Schalter 12 aufgrund der keilförmigen Abkantung betätigt wird. An die Lichtleiter 9 angeformte Zungen 11 dienen zur formschlüssigen Verbindung der Lichtleiter 9 mit der Leiterplatte 7, welche entsprechend ausgeformte Bohrungen aufweist. Die Stromzufuhr erfolgt über Kabel 15, welche zur Leiterplatte 7 geführt und mit dieser über Kontaktstifte 14 elektrisch verbunden sind. Die Leiterplatte 7 nimmt ferner die zum Betreiben der LEDs 8 erforderlichen elektronischen Komponenten auf. Erfindungsgemäß ist es besonders vorteilhaft, dass Leuchtdioden 8 mit einer vergleichsweise geringen Wärmeentwicklung bzw. Verlustleistung verwendet werden, weil hierdurch konstruktive und die Sonnenblende 1 bzw. das Fahrzeugausstattungsteil verteuernde Maßnahmen etwa zur Wärmeabfuhr bzw. die Verwendung von wärmeresistenteren Materialien vermieden werden kann. Ferner ist es erfindungsgemäß besonders vorteilhaft, wenn die Lebensdauer der Leuchtdioden bzw. der Lichtquellen derart lang ist, dass der Fall eines Ausfalls bzw. eines Versagens lediglich der Lichtquellen praktisch kaum vorkommt (so dass für einen solchen Fall der vollständige Austausch des entsprechenden Fahrzeugausstattungsteils in Kauf genommen werden kann), weil dadurch weitere konstruktive und die Sonnenblende 1 bzw. das Fahrzeugausstattungsteil verteuernde Maßnahmen etwa zur Reparaturfähigkeit wegfallen können.

### Bezugszeichenliste:

- 1: Sonnenblende / Fahrzeugausstattungsteil
- 2: Spiegelkassette
- 3: Spiegel
- 4: Feder
- 5: Deckel / bewegliches Element
- 6: Drehachse
- 7: Leiterplatte
- 8: Leuchtdiode (LED) / Lichtquelle
- 9: Lichtleiter
- 10: Leuchtfeld
- 11: Zunge
- 12: Schalter / Schaltelement
- 13: Oberfläche
- 14: Kontaktstift
- 15: Kabel

## Patentansprüche

1. Fahrzeugausstattungsteil, insbesondere Sonnenblende, mit einem beweglichen Element (5), mit Lichtquellen (8) und mit Beleuchtungsstellen (10), wobei das Fahrzeugausstattungsteil ein Schaltelement (12) aufweist, wobei zur Betätigung des Schaltelements (12) ein Zusammenwirken mit dem beweglichen Element (5) vorgesehen ist, wobei das Schaltelement (12) und die Lichtquellen (8) auf einer gemeinsamen Leiterplatte (7) angeordnet sind, wobei das bewegliche Element (5) als ein Deckel (5) vorgesehen ist und um eine Drehachse schwenkbar vorgesehen ist, wobei das Schaltelement (12) im Bereich der Drehachse vorgesehen ist, **dadurch gekennzeichnet, dass** zum Lichttransport zwischen den Lichtquellen (8) und den Beleuchtungsstellen (10) Lichtleiter (9) vorgesehen sind, wobei die Beleuchtungsstellen (10) weiter als das Vierfache der größten Ausdehnung der Leiterplatte (7) von der Leiterplatte (7) entfernt vorgesehen sind und dass die Befeuchtungsstellen (10) einstückig mit den Lichtleitern (9) verbunden sind.

2. Fahrzeugausstattungsteil nach Anspruch 1, **dadurch gekennzeichnet, dass** das Fahrzeugausstattungsteil einen Spiegel (3) aufweist, wobei die Leiterplatte (7) wenigstens teilweise im Bereich des Spiegels (3) oder wenigstens teilweise im Bereich eines Randes des Spiegels (3) vorgesehen ist und wobei die Leiterplatte (7) eine erheblich geringere größte Ausdehnung hat als der Spiegel (3), bevorzugt eine größte Ausdehnung, die der Hälfte der größten Ausdehnung des Spiegels (3) entspricht, besonders bevorzugt eine größte Ausdehnung, die einem Drittel der größten Ausdehnung des Spiegels (3) entspricht, ganz besonders bevorzugt eine größte Ausdehnung, die einem Viertel der größten Ausdehnung des Spiegels (3) entspricht.

## Claims

1. Vehicle fitting part, in particular sun visor, having a moving element (5), having light sources (8) and having lighting points (10), wherein the vehicle fitting part has a switching element (12), wherein interaction with the moving element (5) is intended to operate the switching element (12), wherein the switching element (12) and the light sources (8) are arranged on a common printed circuit board (7), wherein the moving element (5) is provided in the form of a cover (5) and is intended to pivot about a rotation axis, wherein the switching element (12) is provided in the region of the rotation axis, **characterized in that** light guides (9) are provided for transporting light between the light sources (8) and the lighting points (10), wherein the lighting points (10) are provided at a distance from the printed circuit board (7) of more than four times the greatest extent of the printed circuit board (7), and **in that** the lighting points (10) are integrally connected to the light guides (9).

2. Vehicle fitting part according to Claim 1, **characterized in that** the vehicle fitting part has a mirror (3), wherein the printed circuit board (7) is provided at least partially in the region of the mirror (3) or at least partially in the region of an edge of the mirror (3), and wherein the printed circuit board (7) has a considerably smaller greatest extent than the mirror (3), preferably a greatest extent which corresponds to half the greatest extent of the mirror (3), particularly preferably a greatest extent which corresponds to a third of the greatest extent of the mirror (3), very particularly preferably a greatest extent which corresponds to a quarter of the greatest extent of the mirror (3).

## Revendications

1. Pièce d'équipement pour véhicule, en particulier pare-soleil, comprenant un élément mobile (5) avec des sources de lumière (8) et des zones d'éclairage (10), la pièce d'équipement de véhicule présentant un élément de commutation (12), et pour l'actionnement de l'élément de commutation (12), une coopération avec l'élément mobile (5) étant prévue, l'élément de commutation (12) et les sources de lumière (8) étant disposés sur une carte circuits imprimés commune (7), l'élément mobile (5) étant prévu sous forme de couvercle (5) et étant prévu de manière à pouvoir pivoter autour d'un axe de rotation, l'élément de commutation (12) étant prévu dans la région de l'axe de rotation, **caractérisée en ce que** pour le transport de la lumière entre les sources de lumière (8) et les zones d'éclairage (10), des guides de lumière (9) sont prévus, les zones d'éclairage (10) étant en outre éloignées de la carte à circuits imprimés (7) d'une distance de plus de quatre fois la plus grande étendue de la carte à circuits imprimés (7) et **en ce que** les zones d'éclairage (10) sont reliées d'une seule pièce aux guides de lumière (9).

2. Pièce d'équipement pour véhicule selon la revendication 1, **caractérisé en ce que** la pièce d'équipement pour véhicule présente un miroir (3), la carte à circuits imprimés (7) étant prévue au moins en partie dans la région du miroir (3) ou au moins en partie dans la région d'un bord du miroir (3), et la carte à circuits imprimés (7) ayant une plus grande étendue considérablement plus petite que le miroir (3), de préférence une plus grandie étendue qui correspond à la moitié de la plus grande étendue du miroir (3), particulièrement préférablement une plus grande étendue qui correspond à un tiers de la plus grande étendue du miroir (3), et tout particulièrement préférablement une plus grande étendue qui correspond à un quart de la plus grande étendue du miroir (3).
